# EUROPEAN PATENT SPECIFICATION

(11) **EP 3 481 984 B1**
(45) Date of publication and mention of the grant of the patent: **07.09.2022**
(21) Application number: 17739583.7
(22) Date of filing: 14.07.2017
(51) Int. Cl.: D04H 1/4209, C03C 25/00, D04H 1/4218, E04B 1/62

(54) **INSULATION**
ISOLIERUNG
ISOLATION

(30) Priority: 15.07.2016 GB 201612314
(43) Date of publication of application: 15.05.2019
(73) Proprietor: Knauf Insulation SPRL, 4600 Visé (BE)
(72) Inventor: DHEUR, Etienne, 1435 Mont Saint Guibert (BE)
(74) Representative: ARC-IP
(86) International application number: PCT/EP2017/067861
(87) International publication number: WO 2018/011403

(56) References cited:
- JP-A- 2001 098 449
- US-A1- 2009 142 978

## Description

This invention relates to an insulating product comprising mixed mineral wool fibres and a method of providing such an insulating product.

Thermal insulation is often provided to a support surface of a building element, for example as part of a ceiling, by securing an insulating panel of glass wool fibres or by projecting (also called spraying or wet spraying in the US) glass wool fibres with a binder towards the support surface of the building element. Whilst glass wool provides good thermal insulation, where desired fire resistance is required its softening point is generally too low. At temperatures at which fire resistant building insulation should function, and in appropriate tests simulating these conditions, the glass fibres soften or melt leading to destruction and failure of the glass wool insulation.

Rock wool fibres (also known as stone wool fibres) or slag wool have typically been used in to provide thermal insulation in building applications where a level of fire resistance is also required. The higher softening point of stone wool fibres compared with glass wool fibres allows then to maintain their integrity at higher temperatures. However, due to its nature, stone wool insulation, notably when sprayed, generally has a higher density than equivalent glass wool insulation. The additional weight required for stone wool insulation increases the quantity of raw materials required and makes installation, either of panels or sprayed insulation, more difficult.
Spraying of insulation onto support surfaces of building elements is disclosed in "Recommandations professionnelles - Isolation en sous-face des planchers bas", Neuf Renovation (March 2014), which forms part of the Grenelle Environment 2012, an open multi-party debate taking place in France.

One aim of the present invention is to provide an insulating product having a combination of low density and low lambda value which provides good fire resistance to a building element. Another aim of the present invention is to provide better fire resistance to an insulating product which has initially low fire resistance.

In accordance with one of its aspects, the present invention provides a method of providing an insulating layer as defined in claim 1. Additional aspects of the invention are defined in independent claims 11 and 12. The dependent claims define preferred and/or alternative embodiments.

As used herein the term "mixed mineral wool fibres" means a combination of at least first and second mineral wool fibres which are interspersed with each other in a three-dimensional fibre framework. For example, when looking at a sample of a layer of such mixed mineral wool fibres, one can see the framework of interspersed, entangled or overlapping first and second fibres, preferably with the interspersion of the fibres being substantially homogeneous throughout the volume of the framework.

The layer of mixed mineral wool fibres may be a continuous layer, notably a continuous layer extending over the entire area or along an entire surface of the insulating product. The layer of mixed mineral wool fibres may be an external layer of the insulating product; it may be provided adjacent to a further insulating layer. The mineral wool insulating product may comprise an intermediate layer of mixed mineral wool fibres sandwiched between two adjacent layers, for example further insulating layers. The further insulating layer(s) may comprise mineral wool fibres selected from the group consisting of glass wool fibres, rock wool fibres, slag wool, ceramic fibres or combinations thereof. The presence of one or more adjacent layers, notably mineral wool layers, allows optimisation of the thermal and/or fire properties of the product.

The mineral wool insulating product may consist essentially of mixed mineral wool fibres and a binder, notably the mineral wool insulating product may comprise at least 95% by weight of mixed mineral wool fibres and a binder, based on the total weight of the mineral wool insulating product. The term "consists essentially of" is intended to limit the scope of a claim to the specified materials or steps and those that do not materially affect the basic and novel characteristic(s) of the claimed invention.

The mineral wool insulating product may be provided in the form of one or a plurality of mineral wool insulating panel, i.e. a panel having a substantially parallelepiped shape, having a substantially resilient structure and fixed, pre-determined dimensions, and which may be easily transported on site. The mineral wool insulating panel may have a length which is ≥ 90cm, ≥120 cm, ≥150 cm and/or ≤ 220 cm or ≤180 cm. The panel may have a width which is ≥50 cm, ≥ 70 cm and/or ≤100 cm or ≤90 cm.

The mineral wool insulating product is in the form of a sprayed layer, notably obtained by projecting a stream of mineral wool fibres, water and a binder towards a support surface of a building element. A sprayed layer is adapted to cover a larger surface than a single insulating panel or even a plurality of juxtapositioned panels, without interruption. For example, a sprayed layer may be arranged to cover the interface between a wall and an adjacent ceiling without interruption or an entire ceiling or other support structure without interruption. Furthermore, covering a support surface by projecting mineral wool fibres, water and binder towards the support surface generally requires less time than covering the same support surface with a plurality of insulating panels. Preferably a primer bonding layer is firstly applied on the support surface before projecting the mineral wool insulating product in the form of a sprayed layer; this facilitates adherence of a sprayed layer to the support surface. The quantity of primer bonding layer may be at least 80 g/cm², at least 100 g/cm², at least 120 g/cm² and/or less than 160 g/cm², less than 140 g/cm².

When adapted to be projected towards a support surface, the mineral wool fibres may be provided in a package comprising mixed mineral wool fibres, notably in the form of loose fill fibres, preferably with a binder, notably a dry binder, or provided in at least two separate packages, the first package comprising the first loose fill mineral wool fibres, the second package comprising the second loose fill mineral wool fibres. The first mineral wool fibres and the second mineral fibres may be mixed prior to being packaged. A package of loose fill mixed mineral wool fibres may be unloaded into a spraying apparatus, for example in to a hopper, without pre-mixing on site. A package comprising a combination of first mineral wool fibres and second mineral fibres, notably loose and/or mixed first and second mineral fibres, may comprise:
a quantity of the first mineral wool fibres which is at least 60%, at least 70%, at least 80% or at least 90% by weight with respect to the contents of the package; and/or;
a quantity of the second mineral wool fibres which is at least 10%, at least 20% or at least 30% and/or less than 50%, less than 40% or less than 30% by weight with respect to the contents of the package; and/or;
optionally a quantity of dry binder, notably adapted to bind together the first and second mineral wool fibres subsequent to spraying with water, which is less than 10%, less than 8% or less than 6% and/or at least 3% or at least 4% by weight with respect to the contents of the package; and/or
optionally one or more additives, for example an anti-dust agent, such as an anti-dust oil, and/or an anti-static agent, the quantity of the additive(s) notably being in a quantity of less than 1% by weight with respect to the contents of the package.

The support surface may be the support surface, notably a ceiling or wall, of a crawl space, a cellar, a car park, a building or a domestic house. The support surface may comprise wood, metal, gypsum, plaster or concrete, notably as an exposed surface to which the insulating product is secured. The support surface may comprise a covering layer such as paint or varnish. The support surface may be horizontal, vertical or oblique. For example, the support surface may be a metal beam or column of a building, for example a vertical or horizontal load-bearing metal beam.

The combination of the support surface and the mineral wool insulating product may be provided as a pre-fabricated assembly adapted to be transported to its place of use. For example, the mineral wool insulating product may be provided in a prefabricated structure, notably a prefabricated structure comprising the mineral wool insulating product incorporated in a prefabricated wall or panel, for example incorporated in the cavity of a pre-fabricated wall, timber frame or wooden structure or sandwiched between metal plates, for example of a sandwich panel. Generally, however, the mineral wool insulating product will be secured to its support surface on site.

The terminology "first mineral wool fibres" and "second mineral wool fibres" as used herein means that the first mineral wool fibres have a first chemical composition and the second mineral wool fibres have a second, different chemical composition. As used herein, the term, "the same chemical composition" in relation be mineral wool fibres means substantially the same chemical composition, allowance being made for usual industrial manufacturing variations and tolerance and, notably, mineral wool fibres have the same composition when the variation in their chemical composition is within the range:
±2.5% points for each oxide present in a quantity that is ≥ 15 wt-%; and
±1.5% points for each oxide present in a quantity that is ≥ 2 wt-% and < 15 wt-%; and ±1.0% point for each oxide present in a quantity that is < 2 wt%;
with the proviso that (CaO + MgO) and (Na₂O + K₂O) are each treated as one oxide component.

For example, for SiO₂ present in a quantity of 63 wt-%, the tolerance expressed above is 63% ±2.5% points i.e. 60.5% to 65.5%.

The term "different chemical composition" as used herein means that the chemical compositions are not the same and notably that the two compositions fall outside the above tolerances.

For individual fibres which have a homogeneous composition throughout their volume the composition can be measured from a single portion of the fibre. Alternatively, the fibre may be melted to provide a mass having a homogeneous composition for analysis.

For the inventions defined in claim 1 and claim 11, the difference of softening point between the first mineral wool fibres and the second mineral wool fibres is at least 150°C. For the invention defined in claim 12, the difference of softening point between the first mineral wool fibres and the second mineral wool fibres is preferably at least 150°C. The difference of softening point may be at least 200°C, preferably at least 250°C, more preferably at least 300°C. The mineral wool fibres may be selected such that:
- the softening point of the first mineral wool fibres is below a softening threshold; and
- the softening point of the second mineral wool fibres is above the softening threshold; and where
- the softening threshold is a temperature selected from 750°C, 800°C, 850°C, 900°C and 950°C.

The insulating product may comprise first mineral wool fibres having a softening point which is ≤ 750°C; ≤ 800°C or ≤ 850°C and second mineral wool fibres having a softening point which is ≥ 900°C, ≥ 950°C or ≥ 1000°C.

The term "softening point" as used herein means the temperature at which the mineral fibre composition deforms under its own weight and which occurs at a viscosity of 10^{7.6} poise (10^{6.6} Pa.s). Preferably the softening point herein is determined in accordance with International standards ISO 7884-1 and ISO 7884-2; alternatively, it may be determined in accordance with International standards ISO 7884-1 and ISO 7884-6 (versions in force at 15 July 2016).

Without wishing to be bound by theory, it is believed that when subjected to fire conditions representative of building fire resistance tests, the layer of mixed mineral wool fibres forms a protective, agglomerated, high viscosity layer on its side exposed to the fire; this protective layer, which may be a magma layer, appears to provide a protective, refractory or refractory-like layer providing improved fire resistance and protecting the unexposed portion of the mineral wool insulating product. It seems that when the mixed mineral wool fibres reach a temperature above the lower softening point of its first and second mineral wool fibres, these mineral wool fibres will start softening and will connect with the fibres of the second mineral wool fibres having a higher softening point. This is surprising as it would have been thought that the lower softening point mineral wool fibres would simply melt away, notably taking some of the other mineral wool fibres with it, without contributing in any significant way to the product's fire resistance.

In fire resistance tests or conditions the unexposed layer of mixed mineral wool fibres beneath the agglomerated surface layer preferably remains substantially intact. Even if the or part of such an agglomerated, protective high viscosity or refractory layer detaches from the product, a new agglomerated protective high viscosity or refractory layer may be formed from the previous underlying material. Due to this protective high viscosity or refractory layer and its possible regeneration, the mineral wool insulating product is able to provide significantly greater fire resistance compared to glass wool fibres insulating products. As long as the insulating product is still present, the support surface may be protected from fire.

The layer of mixed mineral wool fibres may comprise at least 60%wt, at least 70%wt, at least 80%wt, at least 90%wt or at least 95% by weight of mineral wool fibres. The first mineral wool fibres may be glass fibres and the second mineral fibres may be selected from the group consisting of: rock wool, slag wool, ceramic fibres and combinations thereof. In a preferred embodiment, the first mineral wool fibres are glass wool fibres and the second mineral wool fibres are rock wool fibres.

The amount of first mineral wool fibres may be at least 60%, at least 70%, at least 80% or at least 90% by weight with respect of the total weight of the layer of mixed mineral wool fibres.

The amount of second mineral wool fibres may be at least 10%, at least 20% or at least 30% and/or less than 50%, less than 40% or less than 30% by weight with respect of the total weight of the layer of mixed mineral wool fibres.

It has been found surprising that, when the amount of rock wool fibres in the insulating layer is significantly less than the amount of glass wool fibres, notably less than 30% of rock wool fibres and greater than 60% or 70% of glass wool fibres, the insulating product, notably the sprayed insulating layer, has physical properties, for example density, closer to a glass wool product but has fire resistance properties closer to a rock wool product. Furthermore, even with high proportions, for example at least 70 or 80%wt, of glass wool fibres, the sprayed insulating layer exposed to fire does not react like a glass wool insulating layer, notably the product remains in place to provide fire resistance and does not all melt away.

The glass mineral wool fibres may comprise: > 55 wt-% silicon oxide (SiO₂) and/or < 10 wt-% aluminium oxide (Al₂O₃); and/or an alkali/alkaline-earth ratio of their composition which is > 1; and/or a combined quantity of CaO and MgO < 20 wt-%; and/or a combined quantity of Na₂O and K₂O > 8%wt. The glass wool fibres may have a softening point in the range 600-750°C, notably in the range 650-700°C.

The rock mineral fibres may comprise: between 30 and 55 wt-% SiO₂ and/or between 10 and 30 wt-% Al₂O₃; and/or an alkali/alkaline-earth ratio of their composition which is < 1; and/or a combined quantity of CaO and MgO ranging from 20 to 35 wt-%; and/or a combined quantity of Na₂O and K₂O < 8 wt%; and/or a total iron content expressed as Fe₂O₃ of between 4 and 10 wt-%. The amount of shots (or beads) in the sprayed insulating layer may be less than 1%wt, a shot being defined as a particle having a largest apparent diameter of less than 60µm. The rock wool fibres may have a softening point in the range 900-1200°C, notably in the range 1000-1100°C.

The first and/or second mineral wool fibres may have an average diameter of less than 8µm, preferably less than 6µm, more preferably less than 4µm. The first and/or second mineral wool fibres may have an average length of at least 10µm, at least 12µm and/or less than 40µm or less than 20µm. The first mineral wool fibres and the second mineral wool fibres may have different average lengths, notably a difference of at least 10%, at least 15% or at least 20%. A difference of lengths of between the first and second mineral wool fibres may facilitate entanglement and cohesion of the fibres in the fibre framework.

The mineral wool fibres may be substantially free of silicon, i.e. having a silicon quantity of less than 1% by weight, notably less than 0.1% by weight silicon or be free or substantially free of silicon. Providing mineral wool fibres substantially free of silicon facilitates spraying.

The mineral wool fibres may comprise virgin fibres notably in an amount of at least 70%wt, preferably at least 80%wt, more preferably at least 90%wt, 95%wt or 98%wt, based on the total weight of the mineral wool fibres. Preferably, such virgin fibres are binder free and/or silicon free. The mineral wool fibres may comprise recycled mineral wool fibres, notably in an amount of less than 20%wt or 10 %wt based on the total weight of the mineral wool fibres.

As used herein the term virgin mineral wool fibres means mineral wool fibres that have not previously been incorporated in to a mineral fibre product. As used herein, the term recycled fibres means mineral wool fibres that have been recovered from a formed insulation product, for example from edge trim or scrap product. Preferably the mineral wool fibres are free of flocks comprising fibres and cured binder, for example, from scrap. Preferably, the first and/or the second mineral wool fibres are in the form of fibres and are free from agglomerations of fibres in the form of flocks, notably free from flocks having a geometrical diameter, determined by the apparent circumscribed circle, of at least 4mm or at least 5 mm, notably in the range 5-30mm

The mineral wool insulating product may have a parting strength in the machine direction of at least 2 kPa, at least 4 kPa and/or less than 10 kPa, or less than 8 kPa, notably in accordance with EN 1607.

The mineral wool insulating product may comprise less than 10% by weight of binder, preferably less than 8%, more preferably less than 6%. It may comprise at least 3% by weight or at least 4% by weight of a binder. The binder may be in the form of a dry binder or in the form of an aqueous binder solution, notably prior to being sprayed towards a support surface. The aqueous binder solution may comprise a dry binder mixed with water and preferably comprises a dry binder in the range 5 to 10%wt with respect to the total binder solution. The binder preferably comprises an organic binder, for example PVOH or an acrylic binder, such as EVA.

In fire applications, it would have been thought that using an inorganic binder, such as cement, rather than organic binder was preferable. It could be supposed that cohesion between the mineral wool fibres in the fibre framework was mainly due to the binder, and thus, following decomposition of an organic binder when exposed to fire conditions, the cohesion between the fibres will be reduced and thus the insulating product and/or the layer of mixed mineral wool fibres would be likely to disintegrate or fall. It has been found surprising that despite the use of an organic binder, the fibre framework of the layer of mixed mineral wool fibres is maintained even after decomposition of an organic binder.

The mineral wool insulating product may have a fire reaction classification of at least B, A2 or A1 according to European Standard EN 13501-1. The mineral wool insulating product may have or provide a fire resistance of at least 20 minutes, at least 30 minutes, at least 45 minutes, at least 60 minutes or at least 90 minutes. The fire resistance is notably determined according to EN 1363-1, EN 1365-1, EN 1365-2, EN 1365-3; EN 1365-4, EN 13381-3, EN 13381-4, EN 13381-5, EN 13381-6, EN 13381-7 (the appropriate standard being selected as a function of the building structure or support surface).

The mineral wool insulating product may have a lambda value of less the 42 mW/m.K., preferably less the 40 mW/m.K., more preferably less the 38 mW/m.K, notably when measured at 10°C.

Preferably, the mineral wool insulating product has a substantially white colour. This provides a light reflective product which may improve brightness of an interior. Alternatively, the mineral wool insulating product may be brownish or greyish.

The mineral wool insulating product may comprise one or more additives, for example an anti-dust agent, such as an anti-dust oil, and/or an anti-static agent. The quantity of additive(s) may be less than 1% by weight with respect of the total weight of the mineral wool insulating product.

The layer of mixed mineral wool product may be substantially homogeneous. Preferably the difference of one or more physical measurable properties selected from lambda value, density, and ratio between the two mineral wool fibres, is less than 10%, preferably less than 5%, more preferably less than 3%. This provides substantially even fire resistance in all points of the layer of mixed mineral wool product.

The layer of mixed mineral wool fibres and/or the mineral wool insulating product may have a thickness of at least 30 mm, at least 100 mm or at least 150 mm and/or less than 250 mm or less than 200 mm. The mineral wool insulating product may have a density of at least 50 kg/m³ or at least 60 kg/m³ and/or less than 120 kg/m³, less than 80 kg/m³ or less than 70 kg/m³. These combinations of thicknesses and densities provide good thermal and fire resistance properties without excessive weight which complicates installation.

The density of the layer of mixed mineral wool fibres may be:
- in the range 100 to 120 kg/m³, notably when the layer of mixed mineral wool fibres comprises glass wool fibres in the range 50-60%wt and rock wool fibres (or slag wool) in the range 40-50% by weight;
- in the range 60 to 70 kg/m³, notably when the layer of mixed mineral wool fibres comprises glass wool fibres in the range 70-80%wt and rock wool fibres (or slag wool) in the range 20-30% by weight.

It has been found that when the amount of glass wool fibres in the layer of mixed mineral wool fibres is increased, the density of the layer of mixed mineral wool fibres decreases, notably abruptly between 60 and 70% by weight of glass wool fibres.

When sprayed towards a support surface of a building element, the stream of first and second mineral wool fibres may be mixed with a binder so as to form a layer of mixed mineral wool fibres projected towards the support surface. The distance between the insulation nozzle and the support surface may be at least 0.5 m, at least 1 m and/or less than 3 m, less or less than 2 m. In a crawl space, cellar or car park, the distance may be in the range 0.5 m to 2.5 m.

According to another aspect, the disclosure provides a sprayed mineral wool insulating product comprising a layer of first mineral fibres, notably glass wool fibres, and an adjacent layer of second layer mineral wool fibres, notably selected from: rock wool fibres, slag wool, ceramic fibres or combinations thereof. The sprayed mineral wool product may be provided by:
- spraying towards the support surface a stream of one mineral wool fibres with a binder so as to provide a first sprayed mineral wool layer; and
- subsequently spraying towards the first sprayed mineral wool layer, a stream of the other mineral wool fibres with a binder so as to provide a second sprayed mineral wool layer adjacent to the first sprayed mineral wool layer.

Prior to spraying a primer bonding layer may be applied to the support surface.

According to a further aspect, the present invention provides a mineral wool insulating product comprising a layer, notably a continuous layer, of mixed mineral wool fibres which comprises (in % by weight based on the total weight of the layer):
- a binder;
- at least 50%wt of first mineral wool fibres having a first composition;
- at least 5%wt of second mineral wool fibres having a second composition, as defined in claim 11.

For the invention defined in claim 11, the first mineral wool fibres and the second mineral wool fibres have a difference of softening point which is at least 150°C, preferably at least 250°C.

The mineral wool insulating product may comprise at least 60%wt of mixed mineral wool fibres, preferably at least 75%wt of mixed mineral wool fibres, based on the total weight of the mineral wool insulating product.

The mineral wool insulating product may have a fire reaction classification of at least B, in accordance to EN 13501-1and/or may provide an additional fire resistance to a building element of at least 20 minutes, preferably at least 30 minutes, more preferably at least 45 minutes, in accordance to EN 1363-1, EN 1365 and/or EN 13381.

The mineral wool insulating product may have a lambda value of less than 42 mW/m.K, preferably less than 40 mW/m.K , more preferably less than 38 mW/m.K.

In a preferred embodiment, the first mineral wool fibres are glass wool fibres and the second mineral wool fibres are selected from the group consisting of rock wool fibres, slag wool fibres, ceramic fibres and combinations thereof.

Preferably, the binder comprises an organic binder, notably PVOH or acrylic binder. The layer of mixed mineral wool fibres may comprise between 3 and 8%wt of binder with respect to the total weight of the layer, preferably in the range 4-6%wt, more preferably in the range 5-6%wt.

The layer of mixed mineral wool fibres may have a thickness in the range 30 mm to 210 mm and/or a density in the range 50 kg/m³ to 100 kg/m³, notably in the range 60 kg/m³ to 80 kg/m³.

The mineral wool insulating product may be in the form of a mineral wool insulating panel or in the form of a sprayed insulating layer.

The insulating layer may be provided on a support surface of a building element by spraying mixed mineral wool fibres, together with water and a binder, towards the support surface of the building element to provide a layer of mixed mineral wool fibres, the layer comprising (in % by weight with respect of the total weight of the layer):
- the binder;
- at least 50%wt of first mineral wool fibres having a first composition;
- at least 5%wt of second mineral wool fibres having a second composition.

According to a yet further aspect, the present invention provides a method of providing a fire resistant layer to a support surface of a building element comprising:
- introducing a combination at least 50%wt of glass wool fibres having a first composition and at least 5%wt of second mineral fibres, notably selected from the group consisting of rock wool fibres, slag wool, ceramic fibres and combination thereof, having a second composition into an inlet of a spraying apparatus; and
- projecting simultaneously the glass wool fibres, the mineral wool fibres, water and a binder from a spraying nozzle of the spraying apparatus towards the support surface so as to provide a layer of mixed mineral wool fibres on the support surface.

The first and second mineral wool fibres are preferably provided in the form of loose fill fibres.

An embodiment of the invention will now be described, by way of example only, with reference to the accompanying drawing of which:
Fig. 1 is a picture of a first sprayed insulating product; and
Fig. 2 is a picture of a second sprayed insulating product;
the product in each case having been subjected to fire test conditions and subsequently allowed to cool to room temperature.

A support surface consisting of a plaster board 10 is firstly prepared by spraying a bonding primer on the support surface so that the quantity of bonding primer is about 120 g/m².

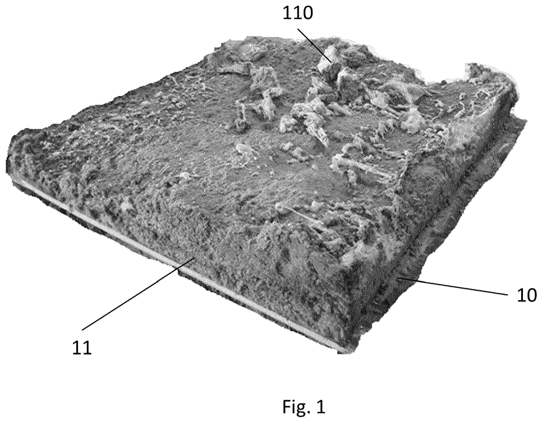

A first sample 1 illustrated in Fig 1 after testing comprises a first sprayed layer of rock mineral wool fibres, in contact with the bonding primer and a second sprayed layer of glass mineral wool fibres. Each sprayed layer is prepared by mixing mineral wool fibres free of binder and free of silicon with an aqueous binder solution comprising 6% by weight of Tris(1chloro-2propyl)phosphate into a mixing apparatus so as to provide a mixed mineral wool fibres comprising about 94.5%wt of mineral wool fibres and a binder content of the mixture being about 5.5%wt.

A second sample 2 illustrated in Fig 1 after testing is prepared by mixing glass wool fibres and rock wool fibres which are both free of binder and free of silicon, with an aqueous binder solution comprising 6% by weight of Tris(1chloro-2propyl)phosphate into a mixing apparatus so as to provide a mixed mineral wool fibres comprising about 94.5%wt of mineral wool fibres and a binder content of the mixture being about 5.5%wt. The mineral wool fibres comprise about 60%wt of glass wool fibres and about 40%wt of rock wool fibres.

Holding the spraying nozzle at a distance of about 1.5 m from the plaster board 10 at a projecting angle of about 90°, an operator sprays, in a single and continuous step, each mixture so as to form a sprayed insulating product 10, 20. The sprayed insulating product of sample 1 and sample 2 have a thickness of about 200 mm and an average density of about 100 kg/m³. In sample 1, the sprayed insulating layer consists of two layers having a thickness of about 100 mm.

Each sample 1, 2 is placed in a vertical position in an oven configured to simulate fire conditions with rising temperature and a maximum temperature of about 900°C. Each test is scheduled to last 30 minutes.

As seen in Fig. 1, the exposed glass sprayed insulating product 10 of the first sample 1 is greatly damaged. Due to the melting of fibres from the sample 1, the test was reduced to 15 minutes. The average thickness of the sprayed insulating product has decreased from about 200 mm to about 110 mm, and with local thickness having further decreased to about 70mm. However, the sprayed layer of rock wool fibres is still present and may provide a fire resistance layer to the support structure.

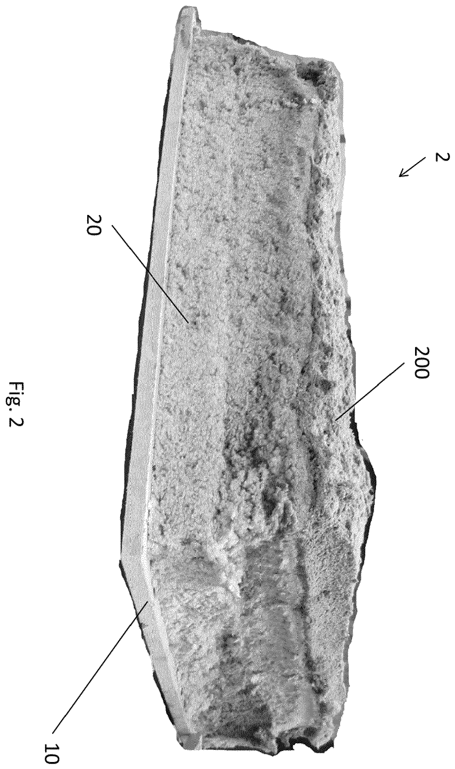

As seen in Fig.2, the sprayed insulating product 20 has an average thickness of about 190mm, the decrease being mainly due to the shrinkage of the sprayed insulating product when subjected to fire conditions. A protective, refractory or refractory-like layer 200 has been formed at the exposed surface of the sprayed insulating product 20. During the fire test this layer had the appearance of a high viscosity magma layer. The unexposed sprayed insulating product is substantially intact and still has the same fire resistance as prior to the test. Contrary to the result achieved, it would have been supposed that the glass wool fibres would have melted and caused disintegration of the entire product.

## Claims

1. A method of providing a fire resistant layer to a support surface of a building element comprising:
- introducing a combination of first mineral wool fibres having a first composition and second mineral fibres having a second composition into an inlet of a spraying apparatus, the first mineral wool fibres and the second mineral wool fibres having a difference of softening point which is at least 150°C, preferably at least 250°C; and
- projecting simultaneously the first mineral wool fibres, the second mineral wool fibres, water and a binder from a spraying nozzle of the spraying apparatus towards the support surface to provide a sprayed layer of mixed mineral wool fibres on the support surface, the sprayed layer of mixed mineral wool fibres comprising (in % by weight based on the total weight of the layer):
- the binder;
- at least 50%wt of the first mineral wool fibres; and
- at least 5%wt of the second mineral wool fibres.

2. A method in accordance with claim 1, wherein the first mineral wool fibres comprise glass wool fibres and the second mineral wool fibres are selected from the group consisting of rock wool fibres, slag wool, ceramic fibres and combination thereof and preferably wherein the second mineral wool fibres are rock wool fibres.

3. A method in accordance with any preceding claim, wherein the method further comprises applying a primer bonding layer on the support surface before projecting the layer of mixed mineral wool fibres.

4. A method in accordance with any preceding claim, wherein the sprayed layer of mixed mineral wool fibres comprises between 3 and 8%wt of binder with respect to the total weight of the layer, preferably in the range 4-6%wt, more preferably in the range 5-6%wt.

5. A method in accordance with any preceding claim, wherein the sprayed layer of mixed mineral wool fibres provides an additional fire resistance to a building element of at least 20 minutes, preferably at least 30 minutes, more preferably at least 45 minutes, in accordance to EN 1363-1, EN 1365 and/or EN 13381 to the building element.

6. A method in accordance with any preceding claim, wherein the sprayed layer of mixed mineral wool fibres has a fire reaction classification of at least B, in accordance to EN 13501-1.

7. A method in accordance with any preceding claim, wherein the sprayed layer of mixed mineral wool fibres has a thickness in the range 30 mm to 210 mm.

8. A method in accordance with any preceding claim, wherein the sprayed layer of mixed mineral wool fibres has a density in the range 50 kg/m³ to 100 kg/m³, notably in the range 60 kg/m³ to 80 kg/m³.

9. A method in accordance with any preceding claim, wherein the support surface is selected from: a support surface, notably a ceiling or wall, of a crawl space, a cellar, a car park, a building or a domestic house; and a metal beam or column of a building, notably a vertical or horizontal load-bearing metal beam.

10. A method in accordance with any preceding claim, wherein the sprayed layer of mixed mineral wool fibres provides a fire-resistant layer to a support surface comprising wood, metal, gypsum, plaster or concrete.

11. A sprayed mineral wool insulating product provided on a support surface of a building element, notably obtained by the method in accordance to claim 1, the layer comprising (in % by weight with respect of the total weight of the layer):
- a binder, notably an organic binder;
- at least 50%wt of first mineral wool fibres having a first composition;
- at least 5%wt of second mineral wool fibres having a second composition;
in which the first mineral wool fibres and the second mineral wool fibres have a difference of softening point which is at least 150°C, preferably at least 250°C.

12. A package comprising loose fibres adapted to be projected towards a support surface comprising:
- first mineral wool fibres having a first composition, notably glass wool fibres;
- second mineral wool fibres having a second composition, notably selected from the group consisting of rock wool fibres, slag wool, ceramic fibres and combination thereof; and
- optionally a dry binder.

13. A package in accordance with claim 12, in which the first mineral wool fibres and the second mineral wool fibres have a difference of softening point which is at least 150°C, preferably at least 250°C.

14. A package in accordance with claim 12 or claim 13,
in which the first mineral wool fibres make up at least 60% by weight, preferably at least 70% by weight of the content of the package; and
in which the second mineral wool fibres make up at least 10% by weight, preferably at least 20% by weight, of the content of the package.

15. A package in accordance with any of claims 12 to 14,
in which the second mineral wool fibres make up at least 10%, preferably at least 20% by weight of the content of the package; and
in which the remaining weight of the content of the package is made up of components selected from: the first mineral wool fibres; the optional dry binder; and optionally one or more additives, notably an anti-dust agent and/or an anti-static agent.

## Patentansprüche

1. Verfahren zum Bereitstellen einer feuerbeständigen Schicht auf einer Trägeroberfläche eines Bauelements, umfassend:
- das Einführen einer Kombination aus ersten Mineralwollefasern mit einer ersten Zusammensetzung und zweiten Mineralwollefasern mit einer zweiten Zusammensetzung in einen Einlass einer Sprühvorrichtung, wobei die ersten Mineralwollefasern und die zweiten Mineralwollefasern einen Unterschied im Erweichungspunkt von mindestens 150°C, vorzugsweise mindestens 250°C, aufweisen; und
- das gleichzeitige Ausstoßen der ersten Mineralwollefasern, der zweiten Mineralwollefasern, von Wasser und einem Bindemittel aus einer Sprühdüse der Sprühvorrichtung in Richtung der Trägeroberfläche, um eine gesprühte Schicht aus gemischten Mineralwollefasern auf der Trägeroberfläche bereitzustellen, wobei die gesprühte Schicht aus gemischten Mineralwollefasern (in Gew.-%, bezogen auf das Gesamtgewicht der Schicht):
- das Bindemittel;
- mindestens 50 Gew.-% der ersten Mineralwollefasern; und
- mindestens 5 Gew.-% der zweiten Mineralwollefasern, umfasst.

2. Verfahren nach Anspruch 1, wobei die ersten Mineralwollefasern Glaswollefasern umfassen und die zweiten Mineralwollefasern aus der Gruppe, bestehend aus Steinwollefasern, Schlackenwolle, Keramikfasern und Kombinationen davon ausgewählt sind, und
wobei die zweiten Mineralwollefasern vorzugsweise Steinwollefasern sind.

3. Verfahren nach einem der vorhergehenden Ansprüche, wobei das Verfahren ferner das Aufbringen einer Grundierungshaftschicht auf die Trägeroberfläche vor dem Ausstoßen der Schicht aus gemischten Mineralwollefasern umfasst.

4. Verfahren nach einem der vorhergehenden Ansprüche, wobei die gesprühte Schicht aus gemischten Mineralwollefasern zwischen 3 und 8 Gew.-% Bindemittel, bezogen auf das Gesamtgewicht der Schicht, enthält, vorzugsweise im Bereich von 4-6 Gew.-%, besonders bevorzugt im Bereich von 5-6 Gew.-%.

5. Verfahren nach einem der vorhergehenden Ansprüche, wobei die gesprühte Schicht aus gemischten Mineralwollefasern eine zusätzliche Feuerbeständigkeit für ein Bauelement von mindestens 20 Minuten, vorzugsweise mindestens 30 Minuten, besonders bevorzugt mindestens 45 Minuten, gemäß EN 1363-1, EN 1365 und/oder EN 13381, für das Bauelement, bereitstellt.

6. Verfahren nach einem der vorhergehenden Ansprüche, wobei die gesprühte Schicht aus gemischten Mineralwollefasern eine Brandreaktionsklassifizierung von mindestens B gemäß EN 13501-1 aufweist.

7. Verfahren nach einem der vorhergehenden Ansprüche, wobei die gesprühte Schicht aus gemischten Mineralwollefasern eine Dicke im Bereich 30 mm bis 210 mm aufweist.

8. Verfahren nach einem der vorhergehenden Ansprüche, wobei die gesprühte Schicht aus gemischten Mineralwollefasern eine Dichte im Bereich von 50 kg/m³ bis 100 kg/m³, insbesondere im Bereich von 60 kg/m³ bis 80 kg/m³, aufweist.

9. Verfahren nach einem der vorhergehenden Ansprüche, wobei die Trägeroberfläche ausgewählt ist aus: einer Trägeroberfläche, insbesondere einer Decke oder Wand, einer Zwischendecke, eines Kellers, eines Parkplatzes, eines Gebäudes oder eines Wohnhauses; und einem Metallträger 5 oder einer Metallsäule eines Gebäudes, insbesondere einem vertikalen oder horizontalen tragenden Metallträger.

10. Verfahren nach einem der vorhergehenden Ansprüche, wobei die gesprühte Schicht aus gemischten Mineralwollefasern eine feuerbeständige Schicht auf einer Trägeroberfläche aus Holz, Metall, Gips, Putz oder Beton bereitstellt.

11. Gesprühtes Mineralwolle-Dämmprodukt, das auf einer Trägeroberfläche eines Bauelements bereitgestellt ist, insbesondere erhalten nach dem Verfahren gemäß Anspruch 1, wobei die Schicht umfasst (in Gew.-%, bezogen auf das Gesamtgewicht der Schicht):
- ein Bindemittel, insbesondere ein organisches Bindemittel;
- mindestens 50 Gew.-% von ersten Mineralwollefasern mit einer ersten Zusammensetzung;
- mindestens 5 Gew.-% von zweiten Mineralwollefasern mit einer zweiten Zusammensetzung;
wobei die ersten Mineralwollefasern und die zweiten Mineralwollefasern einen Unterschied im Erweichungspunkt von mindestens 150°C, vorzugsweise von mindestens 250°C, aufweisen.

12. Verpackung, umfassend lose Fasern, die so beschaffen sind, dass sie auf eine Trägeroberfläche ausgestoßen werden können, umfassend:
- erste Mineralwollefasern mit einer ersten Zusammensetzung, insbesondere Glaswollefasern;
- zweite Mineralwollefasern mit einer zweiten Zusammensetzung, insbesondere ausgewählt aus der Gruppe, bestehend aus Steinwollefasern, Schlackenwolle, Keramikfasern und Kombinationen davon; und
- gegebenenfalls ein trockenes Bindemittel.

13. Verpackung nach Anspruch 12, in welcher die ersten Mineralwollefasern und die zweiten Mineralwollefasern einen Unterschied im Erweichungspunkt von mindestens 150°C, vorzugsweise von mindestens 250°C, aufweisen.

14. Verpackung nach Anspruch 12 oder Anspruch 13, in welcher die ersten Mineralwollefasern mindestens 60 Gew.-%, vorzugsweise mindestens 70 Gew.%, des Inhalts der Verpackung ausmachen; und
in welcher die zweiten Mineralwollefasern mindestens 10 Gew.-%, vorzugsweise mindestens 20 Gew.-%, des Inhalts der Verpackung ausmachen.

15. Verpackung nach einem der Ansprüche 12 bis 14, in welcher die zweiten Mineralwollefasern mindestens 10 Gew.-%, vorzugsweise mindestens 20 Gew.%, des Inhalts der Verpackung ausmachen; und
in welcher das verbleibende Gewicht des Inhalts der Verpackung aus Komponenten besteht, die ausgewählt sind aus: den ersten Mineralwollefasern; dem optionalen trockenen Bindemittel; und gegebenenfalls einem oder mehreren Additiven, insbesondere einem Anti-Staub-Mittel und/oder einem Anti-Statik-Mittel.

## Revendications

1. Procédé de mise à disposition d'une couche résistante au feu sur une surface de support d'un élément de bâtiment comprenant :
- introduire une combinaison de premières fibres minérales ayant une première composition et de secondes fibres de laine minérale ayant une seconde composition dans une entrée d'un appareil de projection, les premières fibres de laine minérale et les secondes fibres de laine minérale ayant une différence de point de ramollissement d'au moins 150°C, de préférence d'au moins 250°C ; et
- projeter simultanément les premières fibres de laine minérale, les secondes fibres de laine minérale et un liant à partir d'une buse de projection d'un appareil de projection en direction de la surface de support afin de fournir une couche projetée de fibres de laine minérale mélangées sur la surface de support, la couche projetée de fibres de laine minérale mélangées comprenant (en % en masse par rapport à la masse totale de la couche) :
- le liant ;
- au moins 50% en masse des premières fibres de laine minérale ;
- au moins 5% en masse des secondes fibres de laine minérale.

2. Procédé selon la revendication 1, dans lequel les premières fibres de laine minérale comprennent des fibres de laine de verre et les secondes fibres de laine minérale sont sélectionnées parmi le groupe consistant en des fibres de laine de roche, de laine de laitier, de fibres céramiques et de combinaison de celles-ci, et de préférence dans lequel les secondes fibres de laine minérale sont des fibres de laine de roche.

3. Procédé selon l'une quelconque revendication précédente, dans lequel le procédé comprend en outre appliquer une couche d'apprêt de liaison sur la surface de support avant la projection de la couche de fibres de laine minérale mélangées.

4. Procédé selon l'une quelconque revendication précédente, dans lequel la couche projetée de fibres de laine minérale mélangées comprend entre 3 et 8% en masse de liant par rapport à la masse totale de la couche, de préférence dans la gamme 4-6% en masse, plus préférablement dans la gamme 5-6% en masse.

5. Procédé selon l'une quelconque revendication précédente, dans lequel la couche projetée de fibres de laine minérale mélangées fournit une résistance au feu supplémentaire à un élément de bâtiment d'au moins 20 minutes, de préférence d'au moins 30 minutes, plus préférablement d'au moins 45 minutes, selon EN 1363-1, EN 1365 et/ou EN 13381 à l'élément de bâtiment.

6. Procédé selon l'une quelconque revendication précédente, dans lequel la couche projetée de fibres de laine minérale mélangées a une classification de réaction au feu d'au moins B, selon EN 13501-1.

7. Procédé selon l'une quelconque revendication précédente, dans lequel la couche projetée de fibres de laine minérale mélangées a une épaisseur allant de 30 mm à 210 mm.

8. Procédé selon l'une quelconque revendication précédente, dans lequel la couche projetée de fibres de laine minérale mélangées a une densité allant de 50 kg/m³ à 100 kg/m³, notamment de 60 kg/m³ à 80 kg/m³.

9. Procédé selon l'une quelconque revendication précédente, dans lequel la surface de support est sélectionnée parmi : une surface de support, notamment un plafond ou un mur, d'un vide sanitaire, une cave, un parking, un bâtiment ou un logement résidentiel ; et une poutre ou colonne métallique d'un bâtiment, notamment une poutre métallique de support de charge verticale ou horizontale.

10. Procédé selon l'une quelconque revendication précédente, dans lequel la couche projetée de fibres de laine minérale mélangées fournit une couche résistante au feu à une surface de support comprenant du bois, du métal, du gypse, du plâtre ou du béton.

11. Produit isolant projeté de laine minérale fourni sur une surface de support d'un élément de bâtiment, notamment obtenu par le procédé selon la revendication 1, la couche comprenant (en % en masse par rapport à la masse totale de la couche) :
- un liant, notamment un liant organique ;
- au moins 50% en masse de premières fibres de laine minérale ayant une première composition ;
- au moins 5% en masse de secondes fibres de laine minérale ayant une seconde composition ;
dans lequel les premières fibres de laine minérale et les secondes fibres de laine minérale ont une différence de point de ramollissement d'au moins 150°C, de préférence d'au moins 250°C.

12. Paquet comprenant des fibres en vrac adaptées à être projetées en direction d'une surface de support comprenant :
- des premières fibres de laine minérale ayant une première composition, notamment des fibres de laine de verre;
- des secondes fibres de laine minérale ayant une seconde composition, notamment sélectionnées parmi le groupe consistant en des fibres de laine de roche, de laine de laitier, de fibres céramiques et de combinaison de celles-ci ; et
- optionnellement un liant sec.

13. Paquet selon la revendication 12, dans lequel les premières fibres de laine minérale et les secondes fibres de laine minérale ont une différence de point de ramollissement d'au moins 150°C, de préférence d'au moins 250°C.

14. Paquet selon la revendication 12 ou la revendication 13,
dans lequel les premières fibres de laine minérale composent au moins 60% en masse, de préférence au moins 70% en masse, du contenu du paquet ; et
dans lequel les secondes fibres de laine minérale composent au moins 10% en masse, de préférence au moins 20% en masse, du contenu du paquet.

15. Paquet selon l'une des revendications 12 à 14,
dans lequel les secondes fibres de laine minérale composent au moins 10% en masse, de préférence au moins 20% en masse du contenu du paquet ; et
dans lequel la masse restante du contenu du paquet est composée de composants sélectionnés parmi : les premières fibres de laine minérale ; le liant sec optionnel ; et optionnellement un ou plusieurs additifs, notamment un agent anti-poussière et/ou un agent antistatique.
